# EUROPEAN PATENT APPLICATION

(11) **EP 0 886 123 A2**
(43) Date of publication of application: **23.12.1998**
(21) Application number: 98111354.1
(22) Date of filing: 19.06.1998
(51) Int. Cl.: G01C 21/20

(54) **Navigation device and navigation method**

(30) Priority: 20.06.1997 JP 180398/97
(71) Applicant: YAMAHA HATSUDOKI KABUSHIKI KAISHA, Iwata-shi Shizuoka-ken, 438 (JP)
(72) Inventor: Nakai, Noboru, Iwata-Shi, Shizuoka-ken (JP); Meguro, Takayoshi, Iwata-Shi, Shizuoka-ken (JP); Kidera, Hiroyuki, Iwata-Shi, Shizuoka-ken (JP); Kurita, Hiroaki, Iwata-Shi, Shizuoka-ken (JP)
(74) Representative: Grünecker, Kinkeldey, Stockmair & Schwanhäusser Anwaltssozietät

(57) **Abstract**

A navigation device for route guidance when driving a vehicle along a pre-set route on the basis of previously input data relating to predetermined points along a desired route and detected data relating to a current point, comprises a main part to be mounted on the vehicle, said main part comprising means for registering said previously input data including for each predetermined point along the route the latitude and longitude, means for receiving said detected data including data representing the current position, means for determining on the basis of previously input data of the next predetermined point and the detected data the distance and direction to a next point on the route, and a screen for displaying said distance and direction. Moreover, a navigation method is proposed. As size and weight of the navigation device can be reduced and its constitution be simplified, it is particularly suited for use with motorcycles.

## Description

This invention relates to the field of vehicle navigation wherein route guidance for driving along a predetermined route is displayed by performing a calculating operation based on previously inputted data for different predetermined points along the route and on data for a current position of the vehicle point detected with a global positioning system (GPS) or the like. More particularly, this invention relates to a navigation device and a method of route guidance.

Lately, technical developments for different types of navigation system as guiding means for automobiles visiting unfamiliar places have been and are briskly going on. In a known automobile navigation device, for example, when starting point data and destination data are inputted, a route searching process is carried out using information on nearby roads, and an optimum route is set from among a plurality of routes. In another known device, a route guidance from the starting point to the destination is provided by performing a specified calculating operation based on previously inputted data for different points on the route and the destination, and on the data for the current position detected with the GPS or the like (For example, Japanese laid-open patent application Hei-5-265376 and Japanese laid-open patent application Hei-6-337218).

### [0003]

In such conventionally known navigation devices, data for the points along the route and the destination are directly inputted to the main part of the device using a map displayed on the screen of the main part of the device through keys. Another method of input is that data previously stored in a personal organizer or a personal computer are sent in a batch by infrared communication for example to the main part of the device. The input is made by the latitudes and longitudes of the points on the route and the destination. A reading device (CD drive) for reading map data (CD-ROM) is provided on the main part side of the device. In any case, map data (CD-ROM) corresponding to a predetermined route are required to set the data for the points on the route and the destination.

With the conventional navigation device as described above, since the data for the points on the route and the destination are set according to the map data (CD-ROM data), a relatively large display screen for the main part of the device by means of a color CRT or a color liquid crystal display is required so that the map based on the map data may be displayed. Therefore, there are limits to simplification and weight and size reduction of the main part of the device. Although such limits pose no problem in automobiles where a certain amount of mounting space is available and the indoor space is not exposed to the outdoor environment, in motorcycles in which the mounting space is small and exposed to severe environmental conditions (the elements), the use of the conventional navigation device is difficult.

The prior art navigation device in which route guidance is displayed according to previously inputted data for the points on the route are large in size and thus cannot be used for vehicles having only a small mounting space. Moreover, they are susceptible to damage and failure when exposed to severe environmental conditions as, e.g. in motorcycles.

The object underlying the invention is to provide an improved navigation device which is small in size and a navigation method requiring only a small amount of data.

This technical problem is solved by a navigation device according to claim 1.

The navigation device according to the invention does not require map data from a CD-ROM. Thus, the size of its main part can be reduced significantly. Moreover, a large display in the main part can be avoided thereby further reducing size and weight of the main part. The navigation device is therefore particularly suited for motorcycles or bicycles.

The above object is also achieved by the navigation method according to claim 10.

According to the route guidance method with the navigation device of the embodiment described above, map data (CD-ROM) corresponding to predetermined routes are unnecessary and the main part of the navigation device does not require a large display screen for displaying a map based on the map data. As a result, the construction of the main part of the device may be simplified, size and weight of the device may be reduced so that the navigation device may be mounted not only on automobiles but also on vehicles, having less mounting space and exposed to severe environment, such as motorcycles.

The turning direction can be calculated from data representing the latitude and longitude of the current positions and at desired predetermined points. Preferably, a turning direction of the vehicle is determined also on the basis of input direction data and detected direction data.

Further advantageous embodiments are laid down in the subclaims.

An embodiment of the navigation device and navigation method will be hereinafter described with reference to the appended drawings.

FIG. 1 is a system block diagram of an example navigation device for carrying out the route guidance method of the invention.

FIG. 2 is a perspective view of the main part, with its display screen in the drive mode, of the navigation device shown in FIG. 1.

FIG. 3 is a view from above the display screen in the drive mode of the main part of the device when the vehicle approaches a point on the route.

FIGs. 4(A), 4(B) and 4(C) are views from above the display screen of the main part of the device in different modes; (A) in the drive mode when the vehicle is distant from a point on the route, (B) in the longitude and latitude display mode, and (C) in the mode for registering the point on the route.

FIG. 5 is an explanatory drawing showing the transition in the navigation display shown on the display screen during driving by means of the navigation device shown in FIG. 1.

FIG. 6 is a perspective view near the handlebar grip of a motorcycle provided with a button for switching the points on the route and a memory button for the navigation device shown in FIG. 1.

FIG. 7 is a side view of a motorcycle with a rider on it, showing the location of warning means of the navigation device shown in FIG. 1.

FIGs. 8(A) and 8(B) are explanatory drawings of examples of (longitude and latitude) data tables registered in a memory using a memory button of the navigation device shown in FIG. 1.

FIG. 9 is a system block diagram for making a simplified memory of a traveled route using the navigation device shown in FIG. 1.

FIGs. 10(A) and 10(B) are explanatory drawings of examples of (longitude and latitude) data tables of traveled routes stored in the memory of the system.

FIGs. 11(A) and 11(B) are an elevation and a side view respectively of two motorcycles showing an example of infrared communication between main parts of the navigation devices shown in FIG. 1 mounted on respective motorcycles (in the case the infrared input-output window is provided on the left side surface of the device).

FIGs. 12(A) and 12(B) are an elevation and a side view respectively of two motorcycles showing an example of infrared communication between main parts of the navigation devices shown in FIG. 1 mounted on respective motorcycles (in the case the infrared input-output windows are provided on both left side surfaces of the device).

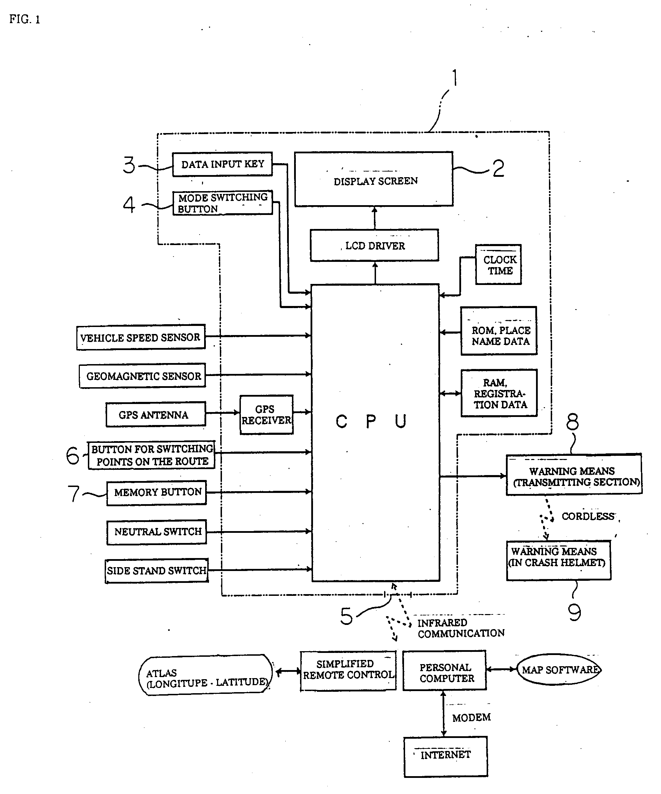

FIG. 1 shows the system constitution of an example of a navigation device for motorcycles. A main part 1 of the navigation device comprises a CPU for controlling the entire system, a ROM for storing data of programs and place names for performing a specified calculating operation, a RAM for registering data of points along the route, a display screen 2 for displaying the result of the specified calculating operation in the CPU through an LCD driver, and a receiver for a global positioning system (GPS) for detecting a current position of the vehicle.

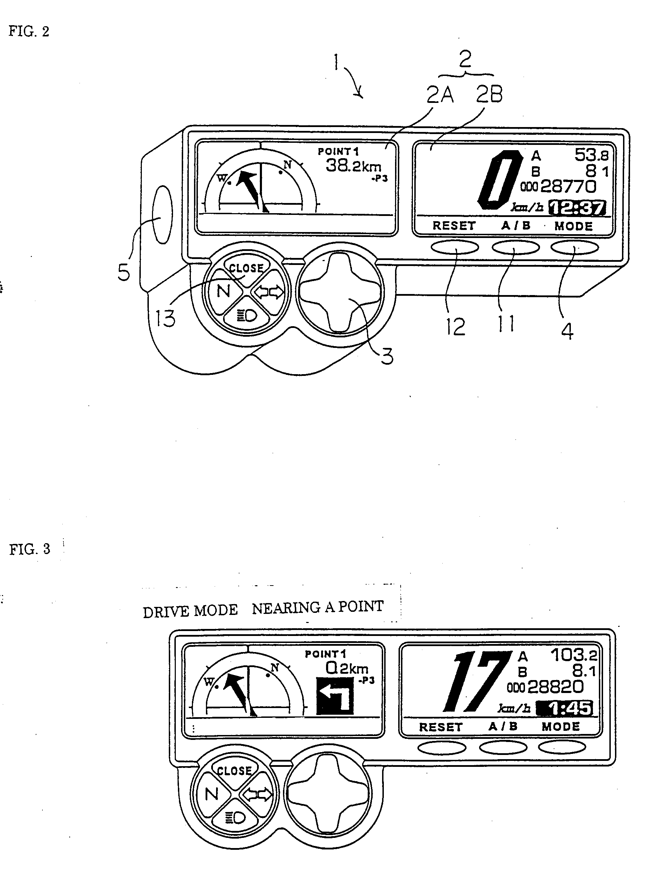

FIG. 2 shows the main part portion of the navigation device for use in the system described above. In this embodiment, the main part 1 of the device is made integral with a liquid crystal display type of meter disposed near the center of motorcycle handlebars. A display screen 2 of the main part 1 of the device comprises a meter display section (display screen 2B) and a navigation display section (display screen 2A) of approximately the same size with each other, arranged closely side by side, the former for displaying vehicle speed (speedometer), traveled distance (odometer and trip meter), and time (digital clock), and the latter for displaying the current point and the distance and direction to the destination (a next point on the route).

As an alternative arrangement of the main part 1 of the navigation device and the meter, the main part 1 and the meter may be made separately and arranged adjacent to each other so that respective display screens are close to each other. Or, if the main part 1 and the meter are made in a body, a single display screen may be used for both the meter display section and the navigation display section.

The main part 1 of the device is provided with a data input key 3 for the rider to input data of the points on the route directly and manually to the main part 1, and with a mode switching button 4 for switching the display modes on the display screen 2, both arranged on the periphery of the display screen 2 of the main part 1 of the device. An infrared input-output window 5 is provided on a side of the main part 1 of the device so that data may be inputted from a separate device such as a simplified remote control or a personal computer by infrared communication and that information stored in a RAM is outputted by infrared communication.

As shown in FIG. 1, a vehicle speed sensor and a geomagnetic sensor disposed at appropriate positions on the vehicle are connected to the main part 1 of the device. A GPS antenna for receiving electromagnetic waves from a satellite in GPS is also connected to a GPS receiver in the main part 1 of the device (for detecting longitude and latitude of the current point from the electromagnetic waves received from the satellite). With the above arrangement, the vehicle speed detected with the vehicle speed sensor, the vehicle direction detected with the geomagnetic sensor, and the current vehicle position detected with the GPS receiver are respectively inputted as route guidance information to the CPU of the main part 1 of the device.

Furthermore, following components are respectively connected to the main part 1 of the device: a button 6 for switching the points on the route and a memory button 7 as means for manually sending signals to the CPU in the main part 1 of the device according to the intention of the rider, a neutral switch and a side stand switch as means for automatically sending signals of the standing state of the vehicle to the CPU in the main part 1 of the device, and a transmitting section 8 as warning means for giving a warning by vibration to the rider. As shown in FIG. 2, a close lamp 13 flashing at the time of warning as one of different display lamps is provided on the top side of the main part 1 of the device.

Different functions of the navigation device of the embodiment constituted as a system as described above, along with the route guidance method using the embodiment, will be hereinafter described.

Prior to using the navigation device, when a route is set using an atlas or the like, appropriate diverging points on the route are set as different points on the route and data for the points on the route are registered in the RAM in the main part 1 of the device. In that case in this embodiment, data for each point (diverging point) on the route are inputted (numerically) in longitude and latitude, and at the same time, the driving direction at each point on the route is also inputted in absolute azimuth (octant) (using an arrow). The data are registered as a table arranged in the order of points on the route.

While the data may be inputted directly through the data input key 3, in this embodiment, a table of data for the points on the route is prepared in advance using a personal computer and map software for the personal computer, and the table is stored in the RAM of the main part 1 of the device by transferring the table as a whole (batch) by infrared communication through an infrared input-output window 5 opened on the main part 1 of the device.

As for the map software for the personal computer, any software may be used in which direction of every road extending from each diverging point is registered with an arrow of absolute azimuth in octant in addition to the longitude and latitude. Using such software, a data table for each point on the route may be easily created by simply selecting and clicking a direction arrow showing the route at the diverging point on the route. Furthermore, remaining arrows which have not been selected may be registered as reference information (different road directions at every diverging point) in a data table for the points on the route.

The method of inputting the data of the points on the route into the main part 1 of the device is not limited to the batch transfer input using a personal computer. The input may also be performed with a simplified remote control by infrared communication, or with an overview table of data for the points on the route created in advance on the display screen 2 of the main part 1 of the device by operating the data input key 3 and directly inputted.

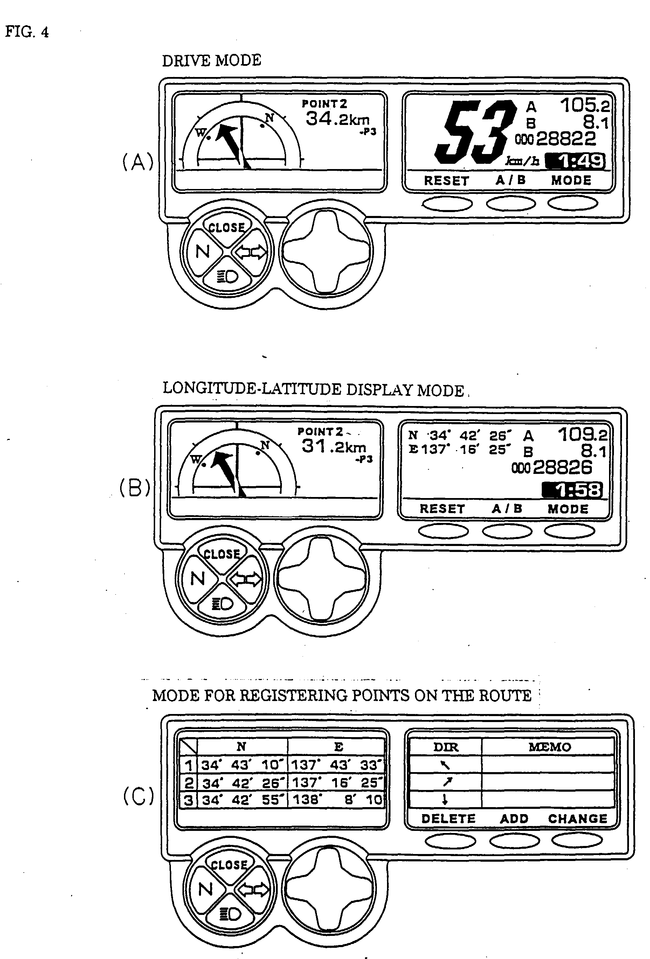

That is to say, in the case the data for the points on the route are directly inputted using the data input key 3, the display on the display screen 2 of the main part 1 of the device is switched using a mode switching button 4 to the mode for registering the points on the route as shown in FIG. 4 (C) (the screen for displaying the table of data for the points on the route), the longitude and latitude of each point on the route and the driving direction in absolute azimuth at each point on the route are inputted on the screen in the mode for registering the points on the route to create the table of data of the points on the route, and the table is stored in the RAM in the main part 1 of the device.

When the mode switching button 4 is pressed, the display on the display screen 2 is switched to a drive mode, the longitude and latitude display mode, or the mode for registering the points on the route as shown in FIGs. 4(A) - 4(C). When the vehicle is driven, the display screen 2 is automatically switched to the drive mode. However, when the vehicle comes to a stop, the display screen 2 may be manually switched to the longitude and latitude display mode or the mode for registering the points on the route.

The display screen 2 of the navigation device which may be switched as described above comprises in this embodiment the display screen 2A for the navigation and the display screen 2B for the meters arranged closely side by side. In the drive mode display as shown in FIG. 4(A), the display screen 2A shows the current point and the distance and direction to the next point on the route, and the display screen 2B shows the vehicle speed (as speedometer), the traveled distance (as odometer and twin trip meters), and time (as digital clock).

In the longitude and latitude display mode, navigation information including the current point and distance and direction to the next point on the route is displayed on the display screen 2A while the display screen 2B, switched from the vehicle speed display, displays navigation information including the longitude and latitude of the current point. In the mode for registering the point on the route, out of the input contents in the table, the longitude and latitude are shown in the screen 2A, and the absolute azimuth and a memo box are displayed in the display screen 2B.

Since the longitude and latitude data need not be displayed on the display screen 2B except for searching the current point on the map, the display may be arranged to be automatically switched to the longitude and latitude display mode only when the vehicle is standing, instead of arranging to be manually switched with the switching button 4 when the vehicle is standing. As to the display design, while the vehicle speed is not shown in the longitude and latitude display mode shown in FIG. 4(B), the vehicle speed may be displayed in a small size so that a space thus produced may be used to display the longitude and latitude.

In this embodiment, in the longitude and latitude display mode showing the navigation information on both display screens 2A, 2B, more important information or the distance and direction to the next point on the route (and turning direction of the vehicle) are displayed on the screen 2A for navigation, while less important information or the longitude and latitude of the current point are displayed on the meter display screen 2B for meters.

As to the display in the mode for registering the point on the route, from the viewpoint of safety, as will be described later (in the description of functions of change, deletion, and addition of data for the points on the route), the display is arranged that it cannot be switched to the mode for registering the points on the route even if the mode switching button is operated while the vehicle is standing unless predetermined conditions are met. Furthermore, it is arranged that even if the display is in the mode for registering the points on the route, once the vehicle starts moving, it is automatically, immediately switched to the drive mode.

Now the operation of the navigation device with the data table for the points on the route registered in the RAM in the main part 1 of the device as described above will be described. While a motorcycle is heading for a destination (a next point on the route), the longitude and latitude of the current point are constantly detected as the GPS receiver receives the electromagnetic waves from the satellite of the GPS and inputted to the main part 1 of the device. A specified calculating operation is performed in the CPU in the main part 1 of the device using the detected data for the current point and the data for the points on the route stored in the RAM according to the program stored in the ROM, and the results are displayed on the display screen 2.

While the vehicle is running, the display screen 2 of the main part 1 of the device is in the drive mode as shown in FIG. 2 or FIG. 4(A), and if the vehicle is running at a point distant from the next point, the place name near the current point is displayed according to the place name data stored in the ROM along with the distance and direction to the next point.

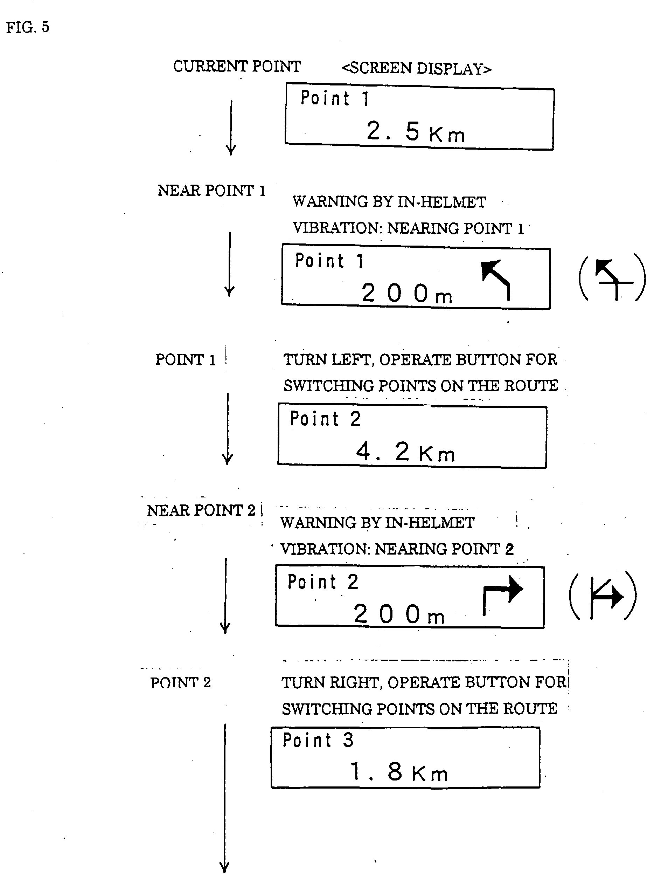

When the vehicle approaches the next point on the route, the vehicle direction at that time point is detected with the geomagnetic sensor and compared with the driving direction. If the vehicle direction is different from the driving direction, the previously inputted absolute azimuth of the driving direction of the next point on the route is corrected, the turning diretion of the vehicle at the next point on the route is determined, and as shown in FIGs. 3 and 5, an arrow for instructing the turning direction of the vehicle at the next point on the route is automatically displayed on the display screen 2A.

By the way in this embodiment as shown in FIG. 3 and FIGs. 4(A) and 4(B), in the drive mode and the longitude and latitude display mode, the place name near the current point and the distance and direction to the next point on the route are constantly displayed on the display screen 2A. In FIG. 5, however, only the distance to the next point on the route and the turning direction of the vehicle are displayed, and other information is omitted.

In other words, in the drive mode while the vehicle is running but distant from the next point on the route, only the place name near the current point and the distance and direction to the next point on the route are displayed on the display screen 2A. When the vehicle approaches the next point on the route, the turning direction of the vehicle is additionally displayed on the display screen 2A, and the close lamp flashes to visually draw the rider's attention. Therefore, the rider is guided to turn and drive along the preset route according to the indicated turning direction at the next point on the route.

With this embodiment in particular, the data at the point on the route are those that have been inputted using the driving direction in absolute azimuth at the point on the route, and the turning direction of the vehicle is determined by correcting the data in absolute azimuth using the actual vehicle direction (data detected with the geomagnetic sensor) at the time of the vehicle coming to the point on the route. Therefore, even if there are a plural number of approaching routes from different directions to the point on the route, or even if the vehicle passes the point while the rider overlooks and turns back, a correct turning direction as seen from the rider is always displayed irrespective of the approaching route to the point on the route.

Furthermore, as already described, if a map software in which directions of roads diverging from a point on the route are all registered with octant absolute azimuth arrows is used, and the directions of other roads at the point on the route are registered as reference information in the data table using arrows when the turning direction of the vehicle is displayed, the diverging state of other roads may also be displayed in parentheses as shown on the right margin of FIG. 5 relative to the turning direction of the vehicle.

As described above, while the turning direction of the vehicle is displayed when the vehicle approaches a diverging point (a point on the route) for which route guidance is required, a motorcycle rider cannot stare the display screen during driving, and therefore the rider might overlook the guidance if it is given by the display only. Therefore, the rider's attention has to be called by some warning other than the display screen.

For that purpose, with this embodiment, when the vehicle approaches a point on the route, not only that the close lamp 13 is caused to flash but also that the rider is caused to recognize that the vehicle is approaching the diverging point (point on the route) by bodily sensation using vibration of a vibrating body provided in the crash helmet. A voice guidance as used in the automobile navigation device cannot be audible because of the wind noise especially at high speeds.

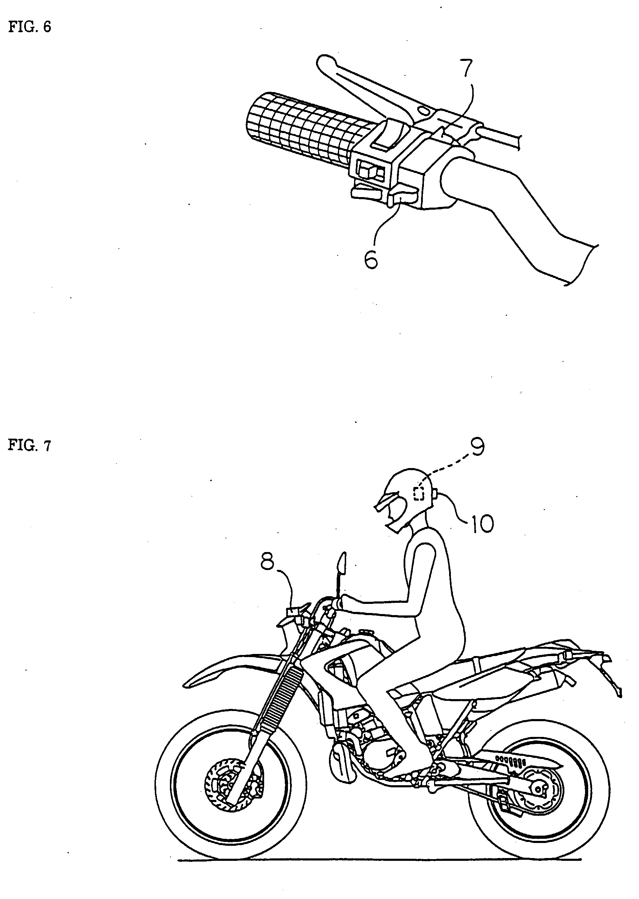

With a warning means shown in FIG. 7, electromagnetic waves are emitted from the transmitting section 8 according to a signal outputted from the main part 1 of the device indicating that the vehicle is approaching a point on the route and perform wireless control of a vibrating body 9 disposed in the crash helmet through a receiver section 10 mounted on the crash helmet surface. In this way, when the vehicle approaches the diverging point (point on the route) for which route guidance is required, the vibration of the vibrating body prompts the rider to watch the display screen 2A. The timing of starting a warning is controlled to vary according to the vehicle speed.

The warning means may be used not only to call attention to the display screen as described above but also to cause the rider to discern the difference in the warning vibration by changing the vibration frequency, or to inform the rider of a turning direction by causing one of two vibrating bodies disposed on right and left sides to vibrate. Also, high frequency sound waves or light beams may be used to provide audio or visual warning in place of warning with the vibrating body.

The rider prompted by the warning described above watches the display screen 2A and drives the vehicle to the turning direction indicated with the arrow, and after passing a point on the route, the vehicle heads for the next point on the route. At that time in this embodiment, the route guidance is not automatically switched for the next point (one point ahead of the point just passed). Instead, the rider, after confirming that the vehicle has passed the point on the route, presses a button 6 for switching the point on the route to switch the route guidance for the next point on the route.

When the button 6 for switching the points on the route is manually operated as described above, the display of the vehicle turning direction goes out and the display screen 2A shows again the place name near the current point and the distance and direction to the next point on the route as shown in FIG. 4(A).

The button 6 for switching the points on the route for the rider to manually operate at the rider's own will is disposed as shown in FIG. 6 in the vicinity of a handlebar grip (in a handlebar switch section) so as to be operated without the rider releasing the handlebar. As long as the data table for the points on the route is organized in the order of the points on the route and registered in advance, the route guidance for the next point on the route may be started by pressing the button 6 for switching the points on the route after passing the current point on the route.

There is a navigation device for automobiles in which the data table for the points on the route for switching the route guidance is stored in a memory. To select the next point after reaching the current point on the route using such a device, it is necessary to reset.

In contrast to the manual switching to the next point on the route as described above, automatic switching at the time of the vehicle passing the current point according to the order of the data table for the points on the route is also conceivable. However, this may cause the allowing problems for example: In the case of an intentional detour around a point on the route, the route guidance thereafter becomes inoperative. The driver may overlook when the vehicle passes a current point on the route. (In the case of manual switching, the direction indicating arrow turns to the opposite direction upon the vehicle passing the current point, which will be immediately noticed by the driver.) In the case the driver inadvertently passes and turns back to the current point, the route guidance to the next point may have already started and the route guidance for the current point may not be provided.

The navigation device of this embodiment is adapted so that the pre-registered data for the points on the route may be changed, deleted, or added in the middle of the preset route when the vehicle is standing.

That is to say, similarly to the direct input and registration of the data, the mode switching button 4 may be used to switch the display screen 2 from the drive mode or the longitude and latitude display mode to the mode for registering the point on the route as shown in FIG. 4(C) in which the table of input contents for the points on the route is displayed. In that state, the displayed data for the points on the route may be changed, deleted, or added, and then registered again in the RAM of the main part 1 of the device.

As shown in FIG. 2, in this embodiment, the trip meter is of a twin type which may be switched to display A or display B with a switch. A mode switching button 4, an A-B switching button 11 for the trip meter, and a reset button 12 are disposed side by side. As shown in FIG. 4(C), when the display screen 2 is switched to the registration mode for the points on the route using the mode switching button 4, the mode switching button 4, the A-B switching button 11, and the reset button 12 are used as operation buttons for changing, adding, and deleting the data shown in the data table for the points on the route.

However, since the driver should not remove a hand from the handlebar for changing, adding, and deleting the data for the points on the route while the vehicle is running, in this embodiment, such operations are made impossible as a matter of course, and moreover, even when the vehicle is standing, it is still impossible to switch to the registration mode for the points on the route unless certain conditions are met. Furthermore, it is arranged that the registration mode for the points on the route is immediately, automatically switched to the drive mode once the vehicle starts running.

The conditions to be met simultaneously to enable switching to the registration mode for the points on the route may be three or four in number for example; the vehicle speed being at 0 km/h, the transmission being in the neutral gear (as detected with a neutral switch), and the mode switching button being on; or further the side stand being on (as detected with a side stand switch).

The navigation device of this embodiment is also adapted to permit registration of points on the route the rider wants to remember (sightseeing spots and diverging roads) with a simple procedure even in the middle of running.

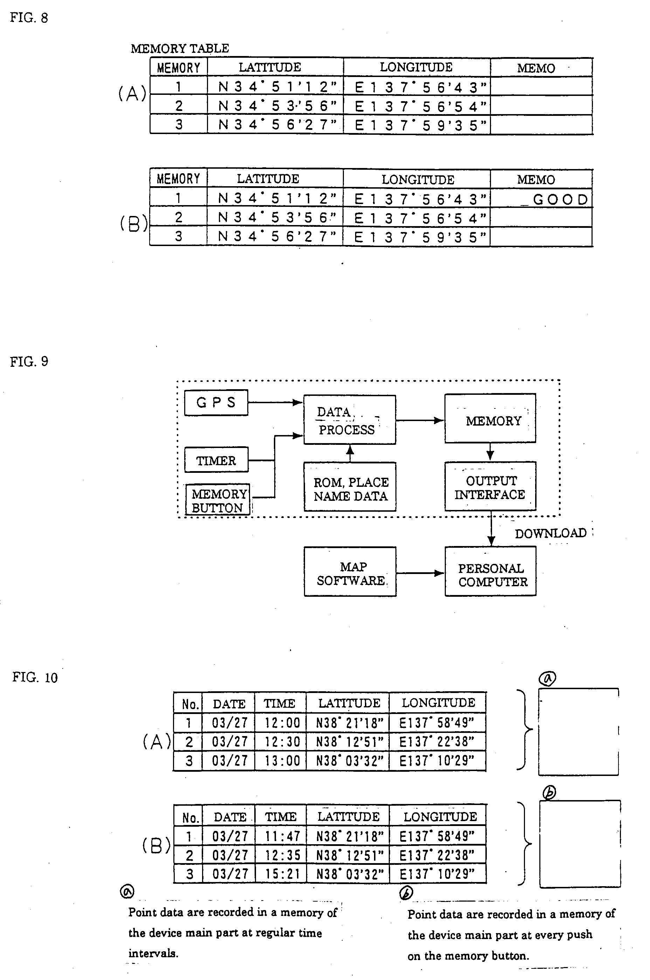

That is to say, as shown in FIG. 6, in the vicinity of the handlebar grip (handlebar switch) of the vehicle, along with the switch 6 for switching the points on the route, a memory button 7 is provided which may be pressed by the driver without removing a hand from the handlebar grip even during driving. When the rider presses the memory button 7, the data of a point the rider wants to remember (sightseeing spot, diverging road, etc.) in longitude and latitude are inputted and stored as the data table (longitude and latitude table) as shown in FIG. 8(A) for example in the RAM of the main part 1 of the device.

With this embodiment having the place name data stored in the ROM, the place names of the points on the route are automatically registered in the memo box of the stored data table simultaneously with the operation described above as shown in FIG. 8(A). The contents in the memo box may be changed later by the user as shown in FIG. 8(B) for example.

Some of the navigation devices for automobiles has a system which permits registration of routes in the current point registration mode. However, with such a system, operation of the display screen is complicated and therefore registration during driving is difficult. On the other hand, with this embodiment, the longitude and latitude of the current point may be easily registered in the memory with a single hand operation on the memory button 7 at the point the driver wants to remember during driving.

The navigation device of this embodiment may also use the system as shown in FIG. 9 to store the running route in a simplified manner in a memory and later to read the stored data so that the running route may be determined or displayed. Furthermore, average traveling speed may also be calculated later for example by interlocking with a digital clock and simultaneously recording the time.

That is to say, in the case the map data (CD-ROM) showing the actually passed points on the map are not used and more than one roads are present between points on the route, it is impossible to determine later which of the roads the vehicle actually followed. With this embodiment, however, using the system shown in FIG. 9 for example, the longitude and latitude of the points on the route may be periodically stored in the memory with the time stamp using a timer at the points passed as shown FIG. 10(A). Or as shown in FIG. 10(B), the longitude and latitude data may be stored in the memory by pressing the memory button 7 at every diverging point on the route (this saves memory space in comparison with the periodical storage using the timer) and later the traveled route may be determined by displaying the stored data and referring to an atlas (carrying longitudes and latitudes), or the stored data may by downloaded to a personal computer and linked to a map software to display the traveled route.

Even in the case the route is not set in advance and the vehicle is freely driven, if the data are stored in the memory as described above, the traveled route may be later determined or displayed, and the average traveling speed may be calculated.

The navigation device of this embodiment is also adapted so that the data in the memory registered or collected in the main part 1 of the device by the use of the memory button 7 may be outputted by infrared communication through the infrared input-output window 5 and that the stored data and data for the points on the route may be downloaded, in addition to inputting data for the points on the route for registration.

In other words, this embodiment is adapted so that data may be exchanged between the main part 1 of the device and an auxiliary input device (such as a personal computer) or between the main part 1 and another main part 1 of the device. In particular as shown in FIG. 2, the infrared input-output window 5 for infrared communication is provided on the side surface of the main part 1 of the device, and directed laterally relative to the advancing direction of the vehicle so that communication between vehicles may be made when they stand side by side.

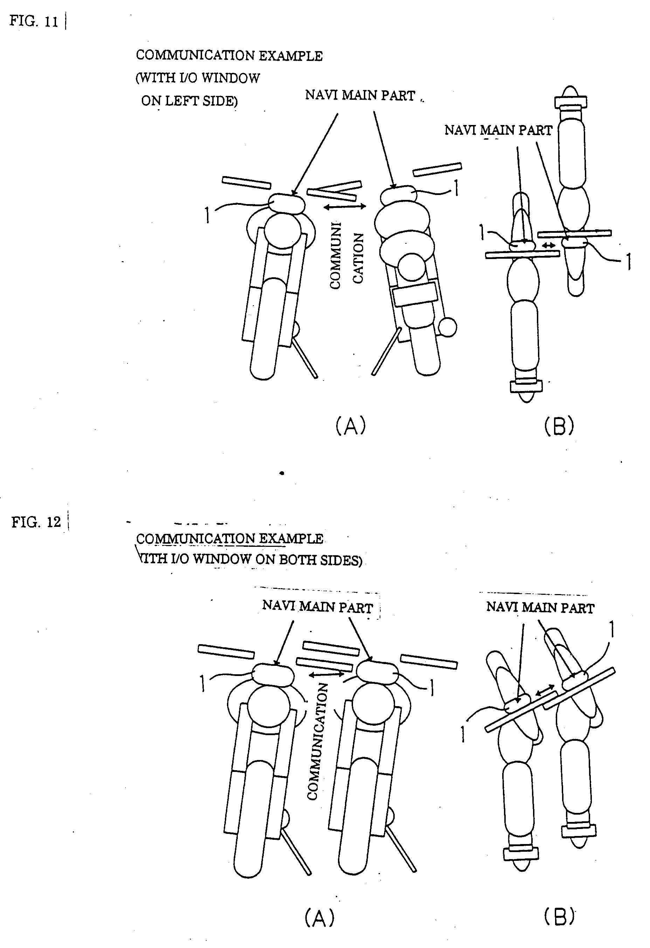

When data are exchanged between two vehicles, the distance between the meter sections of the vehicles may be shortened by bringing the vehicles close to each other in parallel, opposite directions as shown in FIG. 11(B) so that infrared output may be effectively utilized. In that case, the infrared input-output window is preferably provided on the left side of the main part 1 of the device so that the riders need not support the standing vehicles because of the side stand position as shown in FIG. 11(A) and the standing side of the rider. Alternatively, if the infrared input-output windows are provided on both right and left sides, the communication may be made by letting two vehicles stand respectively on the side stands side by side as shown in FIGs. 12(A) and 12(B).

According to the route guidance method with the navigation device of the embodiment described above, map data (CD-ROM) corresponding to predetermined routes are unnecessary and the main part of the navigation device does not require a large display screen for displaying a map based on the map data. As a result, the construction of the main part of the device may be simplified, size and weight of the device may be reduced so that the navigation device may be mounted not only on automobiles but also on vehicles, having less mounting space and exposed to severe environment, such as motorcycles.

With this embodiment in particular, the navigation information is displayed using not only the display screen 2A for navigation but also the display screen for meters originally mounted on the vehicle. As a result, the size of the display screen 2A for navigation may be made smaller, saving the mounting space for the navigation device on the vehicle.

Furthermore with this embodiment, data for the points on the route are inputted in advance using longitude and latitude of every point on the route and absolute azimuth of the advancing direction at every point on the route. When the vehicle approaches a point on the route, the absolute azimuth of the advancing direction is corrected with the approaching direction of the vehicle detected with the geomagnetic sensor, and the turning direction of the vehicle is determined and displayed. As a result, a correct turning direction is always indicated without being affected with the difference in the route along which the vehicle approaches a point on the route.

Furthermore, registering the data of directions of other roads at every point on the route as reference information and displaying them, as shown on the right margin of FIG. 5 in parentheses, together with the turning direction of the vehicle, the road the vehicle should choose at a point on the route is determined more reliably.

With this embodiment, since the data to be registered are created in advance using a personal computer and transferred and inputted in a batch, the registration work, otherwise complicated, is simplified and the data may be controlled with the personal computer.

That is to say, widespread use of high performance personal computers and availability of map software for personal computers of late make it possible to arrange transferable data table using the map software for personal computers and register the table in a batch. This makes it possible to control the data with the personal computer, simplify the registration work which is otherwise complicated, and for the user to create his or her own data library according to the user's taste on the route consisting of data of points on the route.

The infrared communication through the infrared input-output window of the device mounted on the motorcycle for the input and output of data with respect to the main part of the device, unlike the cable communication which requires connectors likely to be affected with water and dust, eliminates the need for such connectors as the connection is made without contact.

Since this embodiment is adapted to give warning to the rider by warning means (vibration body 9) disposed in the crash helmet when the vehicle approaches a next point on the route, it is possible to securely cause the rider to watch the display screen of the navigation device when the route guidance is required for the next point on the route.

While an embodiment of route guidance method with a navigation device of the invention is described above, this invention is not limited to the embodiment having different functions as described above. As a matter of course, the navigation device may be applied to automobiles as well as to motorcycles. Because of its small size, it can be installed easily in the dashboard of an automobile or a motorcycle.

## Claims

1. Navigation device for route guidance when driving a vehicle along a pre-set route on the basis of previously input data relating to predetermined points along a desired route and detected data relating to a current point, comprising a main part (1) to be mounted on the vehicle,
said main part (1) comprising:
means for registering said previously input data including for each predetermined point along the route the latitude and longitude,
means for receiving said detected data including data representing the current position,
means for determining on the basis of previously input data of the next predetermined point and the detected data the distance and direction to a next point on the route, and
a screen (2) for displaying said distance and direction.

2. Navigation device according to claim 1, **characterized in that** said previously input data includes for each predetermined point the driving direction in absolute azimuth, said detected data includes the driving direction, that the main part (1) comprises means for determining a turning direction on the basis of said direction data when the vehicle is near a predetermined point and that the turning direction determined is displayed on the screen (2).

3. Navigation device according to claim 2, **characterized in that** the turning direction of the vehicle is determined near every point on the route by correcting the input driving direction by comparing the driving direction input in the absolute azimuth with the current driving direction.

4. Navigation device according to one of claims 2 or 3, **characterized in that** along with the turning direction in absolute azimuth of the vehicle near every point on the route, directions of other reference points, e.g. other roads, are also displayed on the screen by inputting in absolute azimuth in advance directions of reference points, e.g. of roads, other than the driving direction as reference information.

5. Navigation device according to one of claims 1 to 4, **characterized by** an input device separate from the main part (1) for preparing in advance the data for every point of the desired route, and means for exchanging data between the main part (1) and the input device, in particular for transferring the prepared data in a batch.

6. Navigation device according to one of claims 1 to 5, **characterized by** warning means (9) for arrangement within a crash helmet for giving a driver a warning which warning means cooperates with an output signal operating means (8) on the main part (1) by receiving a signal therefrom when the vehicle approaches a next point on the route.

7. Navigation device according to claim 6, **characterized in that** warning means disposed within a crash helmet are adapted to receive a turning direction signal from the main part (1) to discernibly instruct the driver on a turning direction of the vehicle.

8. Navigation device according to one of claims 1 to 7, wherein the main part (1) further includes means for storing place names in connection with corresponding longitude and latitude data, and wherein the place name near the current point is displayed according to the place name data stored in said storing means along with the distance and direction to the next predetermined point.

9. Navigation device according to one of claims 1 to 8, wherein a metering device for displaying the vehicle speed is integrated in said main part (1).

10. Method of route guidance for driving a vehicle along a preset route, wherein route guidance information is determined by calculating operation based on previously defined data for predetermined points along the desired route and on detected data for a current position, wherein
for every point of said desired route said previously defined data is stored in advance,
a driving direction in absolute azimuth at every point on the route is input in said data including the input of latitude and longitude of every point on the route,
data relating to the current position is detected,
a distance and a direction to a next point on the route are determined and displayed to the driver, and
a turning direction of a vehicle is determined and displayed to the driver when the vehicle is near a predetermined point on the route.
